Europäisches Patentamt

(19) European Patent Office

Office européen des brevets

(11) Publication number: 0 049 000
B1

(12) **EUROPEAN PATENT SPECIFICATION**

(45) Date of publication of patent specification: 21.08.85

(51) Int. Cl.⁴: **B 21 B 3/02, F 16 L 59/08**

(21) Application number: **81108859.0**

(22) Date of filing: **24.04.79**

(80) Publication number of the earlier application in accordance with Art. 76 EPC: **0 005 340**

(54) Heat shields for rolling mills.

(30) Priority: **27.04.78 GB 1670478**

(43) Date of publication of application:
**07.04.82 Bulletin 82/14**

(45) Publication of the grant of the patent:
**21.08.85 Bulletin 85/34**

(84) Designated Contracting States:
**BE DE FR IT LU NL**

(56) References cited:
**GB-A-1 040 420**
**US-A-3 264 856**

(73) Proprietor: **ENCOMECH ENGINEERING
SERVICES LIMITED
729 London Road
Hounslow, TW3 1SE (GB)**

(72) Inventor: **Laws, William Robert
19 Tudor Avenue
Worcester Park Surrey (GB)**
Inventor: **Reed, Geoffrey Ronald
8 Beechdene
Tadworth Surrey (GB)**

(74) Representative: **Gura, Henry Alan et al
MEWBURN ELLIS & CO. 2/3 Cursitor Street
London EC4A 1BQ (GB)**

EP 0 049 000 B1

Courier Press, Leamington Spa, England.

# Description

This invention relates to heat shields for use in steel rolling mills.

In steel mill processing whether of billets, strip or sections, the metallurgical qualities of finished product are closely related to the accurate control of temperature of the material during the hot rolling process. For example, a modern hot strip mill producing steel coil is several hundred metres long and, typically, steel slabs or billets may be reduced from 25 cms thickness to 0.2 cms using several roughing mill stands and five or more finishing mill stands. During the rolling process considerable heat losses occur so that the slabs have to be heated initially well in excess of the temperature requirement at the end of the process, but a particular problem has been that the heat losses from slabs passing along the mill depend upon the time taken. If the slabs are delayed, excessive heat losses occur and the steel strip does not have its required rolling temperatures, so that it may have to be downgraded or even scrapped. In many long modern rolling mills the delay of one length of strip at the finishing end has an effect on the several lengths of material which are simultaneously at various preceding stages of rolling. Thus with more stringent quality specifications it is becoming more important to reduce the rate of heat loss from the material during transport between stands.

There is an added difficulty in this because during the final reduction stages the back end of the strip takes longer to pass through the finishing mills and so there is a temperature "run-down" along the steel strip due to the cumulative time delay along the length of the strip. The effect of temperature "run-down" is to some extent ameliorated by accelerating the finishing mills during the rolling of each individual slab or strip, but nevertheless it remains a problem.

Attempts have been made in the past to reduce the heat loss from the top surface of a hot strip during transport from the roughing mills to the finishing mills. Because radiation is a major source of heat loss at the temperatures involved (around 1060°) aluminium reflectors have been fixed over the hot strip to reduce temperature "run-down". However maintenance problems limit the usefulness of reflectors which become inefficient as soon as they become dirty, and in addition, the aluminium reflectors which have been used for their high reflectivity and relatively low cost can reach their melting temperature if their reflectivity decreases.

It has been in proposed GB—A—1040420 to employ, above the hot strip in a hot-rolling mill, heat reflecting panels made up of two similarly corrugated thin plates, the plates being arranged one over the other with the corrugations at right angles. Thermal insulation material is put on the upper face of each plate to reduce heat losses. This proposal offers a theoretical advantage in that it provides a re-radiating surface that heats up quickly to a luminous temperature close to that of the hot strip and so inhibits radiation from the strip, but the use of such panels raises practical problems.

To give the required structural stiffness to two thin plates with transverse series of corrugations, the plates must be secured together at the points of contact of their mutually transverse corrugations. Unless they are attached thus they cannot provide a stable planar structure. In principle, the individual corrugations are then still able to flex to accommodate relative expansion effects when the panel is heated, but under the very severe conditions encountered in steel rooling mills, particularly because of the need to have very rapid heating of the panels over a very large temperature range if they are to perform their function, the mechanical strains and the high maximum temperatures impose stresses on the point attachments that very quickly lead to fracture and to separation of the plates. The use of thermal insulation over each corrugated plate as proposed by GB—A—1040420 makes the problem worse as this increases the temperature differentials between the upper and lower plates and therefore adds to the mechanical strain upon the point attachments.

The very large and rapid temperature variations in operation and the resulting considerable thermal expansion movements also quickly affect the thermal insulation material, having regard to the fact that its expansion co-efficient will be very different from that of the metal plates. This can result in displacement of the material that gives a non-uniform insulating effect adversely affecting the efficiency of operation, and it can also considerably reduce the operational life of a panel as the substantial relative thermal movements are likely to cause mechanical damage to the insulation.

According to the invention, there is provided a composite thermal insulation panel for use in a steel rolling mill, comprising a face backed by thermal insulation means and adapted to be heated by adjacent hot material in the mill to a temperature close to that of the material to radiate heat back to the material, the panel comprising a protective outer casing which contains at least one fibrous ceramic heat-insulating layer a cover plate forming or overlying a main face of the casing being arranged to provide a hot face confronting the hot material and being capable of relative thermal expansion with respect to adjacent regions of the casing. If the cover plate is made relatively thin to have a low thermal capacity, at least a part of its area may be provided with dimples, corrugations or other locally contoured formations to increase the heat emissivity of its surface and such contouring may also be arranged to contribute to the strength of the cover plate and its ability to withstand thermal stresses, as well as to allow a measure of independent thermal expansion by flexure.

The casing may comprise a peripheral housing that supports the cover plate in a manner that permits its relative thermal expansion, and the opposite main face of the panel forming its cold face may similarly be provided with a cover plate mounted in a manner permitting relative thermal expansion, so that thermal stresses on the casing are kept to a minimum.

Preferably, the casing provides a substantially dust-tight enclosure for the insulating core. Venting apertures may be arranged in the casing for the escape of air and steam from within, the apertures being provided with valves for preventing or limiting a return flow through them.

Panels according to the invention can be disposed both above and below the material path in a rolling mill. Panels below the material path are particularly vulnerable to the ingress of foreign matter and the cover plates may then be welded in place to give better protection. In that case it may be necessary to rely upon the contouring of a cover plate to permit its relative thermal expansion with respect to the adjacent regions of the casing, and in a preferred arrangement the panel has a relatively narrow hot face and the cover plate has corrugations running transversely to the length of the panel.

Panels according to the invention may be so arranged as to form a substantially enclosed tubular conduit for the hot material. If the hot material is in the form of rolled sections, it may be convenient to use panels of an arched or channel transverse cross-section to achieve this end.

The invention will be, described by way of example with reference to the accompanying diagrammatic drawings, wherein:—

Fig. 1 is a longitudinal vertical cross-section showing details of the heat insulation panels of respective upper and lower series of panels of a heat shield arrangement extending along a transfer conveyor or roller table in a steel strip mill,

Figs. 2 and 3 illustrate details of a modified form of panel according to the invention,

Fig. 4 is a longitudinal section showing a feature of a heat shield arrangement incorporating panels according to the invention,

Fig. 5 is a transverse cross-section of a further heat shield arrangement incorporating panels according to the invention, and

Figs. 6 and 7 show schematically alternative heat-insulation panels for the arrangement in Fig. 5.

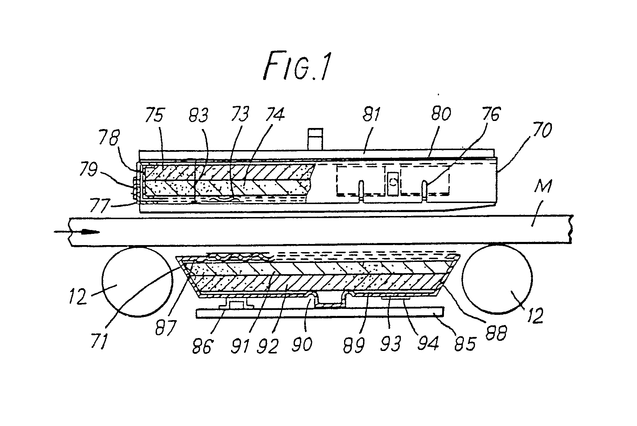

As is described in our European patent application 79.300686.7 (published as EP—A—0005340) from which this application is divided, the path of the hot material M being processed in steel strip mill is shielded against loss by series of heat-insulating panels, Fig. 1 of the accompanying drawings showing a longitudinal sectional view of a roller table of the mill over which the material M travels. The material is supported on rollers 12 of the table, and Fig. 1 illustrates the construction of upper and lower thermal insulation panels 70, 71 of respective series of panels that extend along the roller table to function as a heat shield for the material.

The upper panel 70 comprising a casing containing a two-layer core of heat-insulating material consisting of high temperature ceramic fibre board insulation 74 adjoining a bottom cover plate 73 forming the hot face of the panel, the insulation 74 being backed by lower temperature insulating board 75. The cover plate 73 is formed by a thin sheet of temperature resistant material, e.g. stainless steel, which material can be made either heat reflecting or absorbing, and preferably has corrugations, dimples or other local contouring. The cover plate rests upon heat-resistant angle-section frame 77 of the casing, which allows free thermal expansion of the plate, and slots 76 in the frame also allow its relative thermal expansion. The top of the panel is sealed by a top plate 80 to which is fixed a mounting lug 81.

The cover plate is held from above against the horizontal flanges of the frame 77 by leaf springs 78 to help provide a seal between the plate and the frame and so minimise the intrusion of dirt and steam into the ceramic fibre core. Vents 79 can also be provided in the side walls of the mounting frame 77 to facilitate the escape of stream if, as during periods of inactivity, water is absorbed by the core and is subsequently vaporised by the heating that occurs when the panel begins to be used again. One-way flap valves on the vents 79 help to prevent the ingress of steam from the surroundings. It should be noted that if the cover plate is very thin, extra retaining clips 83 may be required to hold it against the ceramic fibre material of the core.

In many respects the lower panels are of similar construction to the upper panels. As shown in Fig. 1, each lower panel is supported on the table base plate 85 and can rest thereon either directly or through brackets 86. The cover plate 87 forming the hot face of the lower panel has local contouring like the plate 73 but forms an integral part of an outer casing of welded construction with stainless steel side walls 88 and base 89 as below the strip greater protection is needed against the ingress of foreign matter. The contouring is preferably in the form of a series of parallel corrugations arranged particularly to accommodate thermal expansion of the hot face relative to the remainder of the panel, but because the cover plate is restrained at its edges, the casing is made relatively narrow in the direction of the corrugations, e.g. some half the length transvere thereto. The corrugations also increase the effective emissivity of the hot face, as mentioned above, and strengthen the relatively thin material.

The base of the casing has one or more corrugations 90 or like local contouring to allow differential thermal expansion and the panel is filled with a core of higher and lower temperature insulating ceramic fibre panels 91, 92 respectively, similar to the upper panel core. Small steam vents 93 are provided in the base of the panel to allow venting of trapped water and these are normally closed by one-way flap valves 94.

Heat radiated from the strip will impinge on the cover plates of the panels. Initially the front end of the strip will cool at almost the rate it would achieve the free air while the cover plates are cool. If the plates are thin — for example, less than 1/50th of the thickness of the hot strip — then their temperature will quickly rise towards the strip temperature without a significant drop in strip temperature, and as heat loss into the panels is minimised by the thermally insulating core and the panels almost immediately begin to re-radiate heat, and temperature equilibrium is established with the strip to give it a more uniform temperature as it enters a roll stand.

The total effective emissivity of the cover plates of the re-radiating panels is increased by the substantial corrugating or dimpling or like local contouring of their surface, and since the cover plates are preferably very thin contouring can serve to strengthen the plates and allow local flexing to facilitate relaxation of thermal stresses set up by rapid heating and cooling of the plates.

The cover plates can be heat-reflecting but in general it will be found convenient to make them black to suit the dirty environmental conditions and in this case they can operate better to improve the temperature distribution in the common condition of a strip with a higher temperature leading end, or where there is some time lag in the passage of the trailing end to a roll stand.

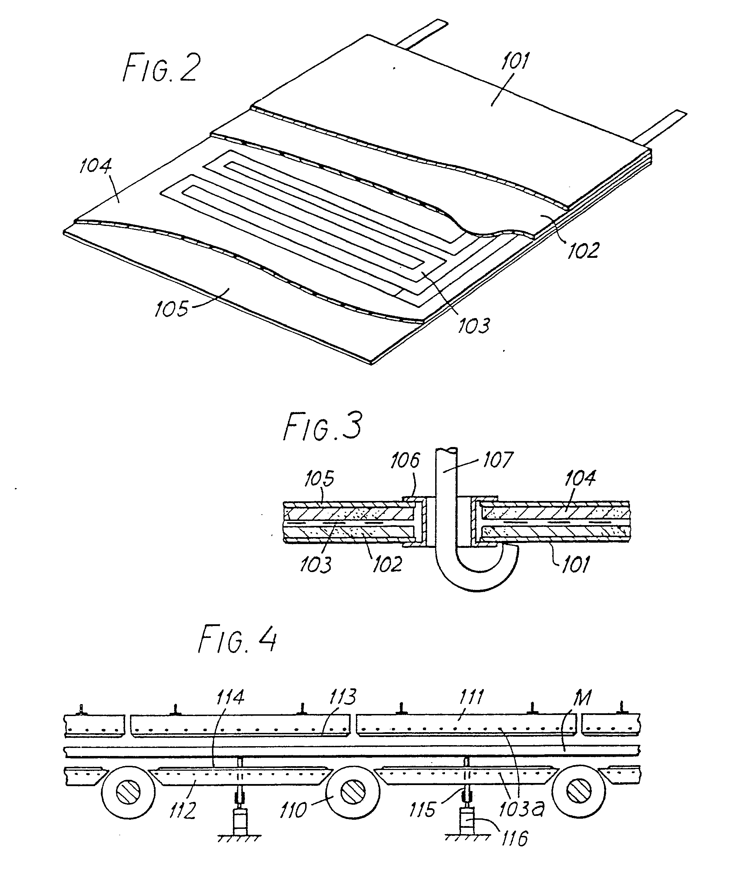

In some circumstances it may be required not only to conserve the heat in the material being processed but also to apply further heating. For example, this might be necessary if the material is to be held at a constant temperature. It is possible then to provide heating means in or on the insulation panels themselves, as is illustrated in Fig. 2 or Fig. 3. These show a multilayer cover plate, with a front plate 101 forming the hot face of the panel, a first electrically insulating layer 102, an electrical strip heating element 103 capable of operating at a temperature of 1100°C or more, a second insulating layer 104, and a back plate 105 that like the front plate is suitable for use at high temperatures. The layers are secured together by hollow rivets 106 that may also serve to receive suspension ties 107 for the panel, although panels with cover plates of this construction are suitable for mounting both above and below the material being shielded. To maintain the material temperature, the element 103 may be of relatively low power, e.g. up to 5 kw/m², but higher powers may be used when required.

The use of panels with heating elements is shown in the heat shield arrangement in Fig 4, although tubular sheathed elements 103a are illustrated. This example shows a further heat conservation measure, it being assumed that the arranegment is employed with an existing steel mill roller table, which will be equipped with large diameter rollers 110 of high thermal capacity, often water-cooled. The upper and lower thermal insulation panels 111, 112 have the general composite construction already described and both series of panels are arranged in pairs side-by-side, with a central skid bar or like contact member 113 and 114 respectively, between the panels of each pair. The lower panels are also so constructed that there are two or more successive panels along the distance between adjacent rollers 110, and between these successive panels lifting members in the form of transversely extending lifting bars 115 are interposed. These bars, of a higher temperature alloy and possibly also provided with heat insulation, can be raised, e.g. by fluid pressure rams 116, to the position shown and so lift the material M from the rollers 110. The mechanism can be used when the operation of the mill requires the material on the roller table to be stopped for any significant length of time in order to avoid differential cooling of the material at the regions of contact with the rollers.

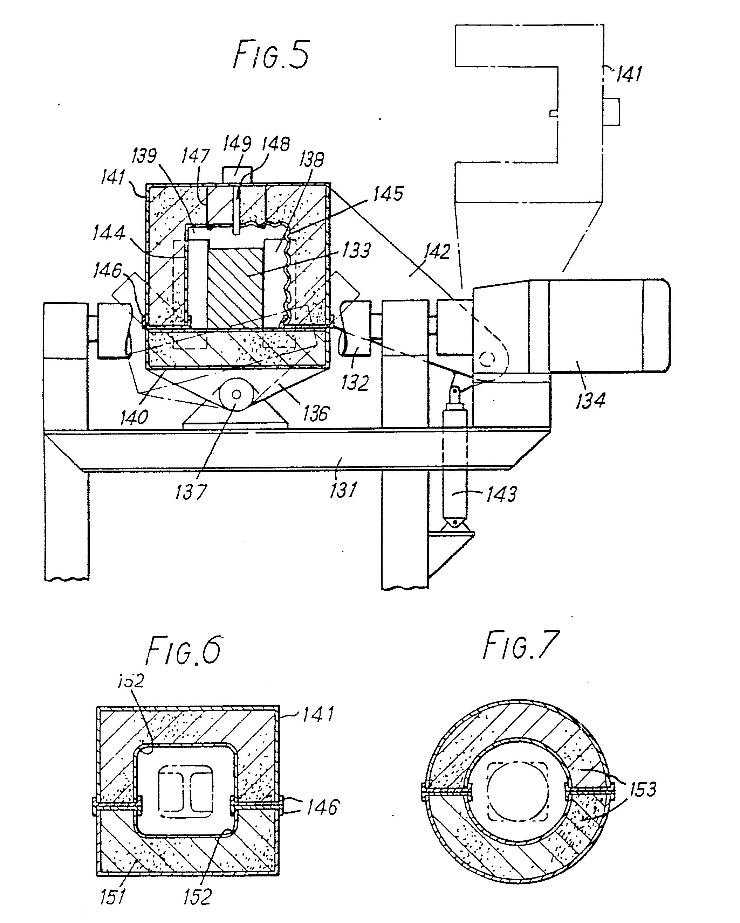

The use of panels according to the invention is not restricted to installation in which the heated material is in strip form, and Figs. 5 to 7 illustrate the application of the invention to control the temperature of bar or profiled section stock moving along a conveyor path.

Mounted on a fixed frame 131 are drive rollers 132 for the stock 133, shown here as a square section bar, driven by one or more motors 134. The conveyor path runs perpendicular to the plane of the figure. Mountings 136 pivotable about on axis 137 parallel to the conveyor path carry upwardly projecting side support rollers 138 for the stock and lower heat shield panels 140 of the composite construction already described. Together with upper U-form panels 141 of similar construction these lower panels 140 form a tubular enclosure 139 for the stock. The upper panels 141 are displaceable on pivotable support means 142 that allow them to be swung upwards to the broken-line position by rams 143, clear of the conveyor and the stock on it. When the upper panels have been swung away in this manner, the side support rollers 138 can be pivoted downwards to give free access to the stock. The pivoting of the mountings 136 for the bottom panels allow them to be tilted when the installation is being serviced to shake off any accumulation of mill scale or other foreign matter.

Because the top panel has a cross-sectional profile that increases its stiffness as compared with the flat panels so far described, it can be made considerably longer: it may have flat faces 144 or axial corrugations 145 can be provided to stiffen the inner cover plate, as has already been described. This inner cover plate is allowed some freedom to expand axially and laterally and is retained in place by lipped edges 146 of the panel casing and heat-resistant ties 147 passing through the inner core of insulating material. A contact member or bumper bar 148 projects through the top panels to protect them from being damaged by out-of-shape material. As described in our European specification No. EP—A—0005340 the bar can be displaceably mounted relative to the panels 141 and be provided with impact sensors 149 arranged to trigger the operation of the lifting rams 143 for raising the top panels if struck with sufficient force by the stock 133.

The cross-sectional profile of the panels can be varied, for example, to suit a particular cross-section profile material, as is exemplified in Figs. 6 and 7. In Fig. 6 like the upper panel 141, the bottom panel 151 also has a U-form profile increasing its stiffness and the radiussing of the cover plates at the inner corners 152 of the panels can improve the uniformity of the temperature of the stock in the enclosure. The corners of rectangular stock or even of the outer edges of the flanges of the I-section shown will normally radiate heat more freely and so cool faster, but the increased insulation of the radiussed corners of the panels has an opposite and therefore compensating effect. A similar effect can be obtained with the configuration shown in Fig. 7, where both panels 153 have a semi-circular cross-section. The other features described with reference to Fig. 5 can of course also be provided in heat shield arrangements using these panels of different profiles.

EP—A—0005340, which has the same priority date and designates the same States, claims subject-matter described herein.

**Claims**

1. A composite thermal insulation panel for use in a steel rolling mill, comprising a face backed by thermal insulation means and adapted to be heated by adjacent hot material in the mill to a temperature close to that of the material to radiate heat back to the material, characterised in that the panel (70 or 71 or 111, 112 or 140, 141) comprises a protective outer casing containing at least one fibrous ceramic heat-insulating layer (74, 75 or 91, 92) a cover plate (73 or 87) forming or overlying a main face of the casing being arranged to provide a hot face confronting the hot material and being capable of relative thermal expansion with respect to adjacent regions of the casing.

2. A panel according to claim 1 wherein the cover plate has at least a part of its area provided with locally contoured formations.

3. A panel according to claim 1 or claim 2 wherein the casing has a main face (89) opposite to said cover plate main face that is arranged to permit thermal expansion with respect to adjoining regions of the casing.

4. A panel according to any one of claims 1 to 3 wherein a substantially dust-tight enclosure for the core is formed by the casing, or by the casing and cover plate jointly, and vents (79 or 93) to the exterior from the interior of the casing are provided with non-return closure means (94) for preventing or limiting a return flow therethrough into the casing.

5. A panel according to any one of the preceding claims wherein supporting elements (83 or 147) for the cover plate extend through the core of the panel to said plate.

6. A panel according to any one of the preceding claims wherein the cover plate (87) forms an integral welded construction with adjoining side faces (88) of the panel.

7. A panel according to any one of claims 1 to 5 wherein the casing comprises a peripheral support frame (77) against which the cover plate (73) freely rests to permit relative thermal expansion between the cover plate and the casing.

8. A panel according to claim 7 wherein resilient means (78) urge the cover plate against said support frame.

9. A panel according to any one of the preceding claims comprising heating means (103 or 103a) disposed immediately adjacent said hot face.

10. A panel according to any one of the preceding claims having an arched or channel transverse cross-section.

**Revendications**

1. Panneau composite d'isolement thermique à utiliser dans un laminoir d'acier, comprenant une face couverte d'un moyen d'isolement thermique et pouvant être chauffée par le matériau chaud adjacent dans le laminoir à une température proche de celle du matériau pour rerayonner de la chaleur vers le matériau, caractérisé en ce que le panneau (70 ou 71 ou 111, 112 ou 140, 141) comprend une enveloppe externe protectrice contenant au moins une couche d'isolement thermique en céramique fibreuse (74, 75 ou 91, 92), une plaque de recouvrement (73 ou 87) formant ou recouvrant une face principale de l'enveloppe étant agencée pour former une face chaude face au matériau chaud et étant capable d'une dilatation thermique relative par rapport aux régions adjacentes de l'enveloppe.

2. Panneau selon la revendication 1 où la plaque de recouvrement a au moins une partie de sa surface pourvue de formations localement contourées.

3. Panneau selon la revendication 1 ou la revendication 2 où l'enveloppe a une face principale (89) opposée à la face principale de la plaque de recouvrement qui est agencée pour permettre une dilatation thermique par rapport aux régions adjacentes de l'enveloppe.

4. Panneau selon l'une quelconque des revendications 1 à 3 où une enceinte sensiblement étanche à la poussière pour le noyau est formée par l'enveloppe, ou par l'enveloppe et la plaque de recouvrement conjointement et des évents (79 ou 93) vers l'extérieur à partir de l'intérieur de l'enveloppe sont prévus avec un moyen de fermeture antiretour (94) pour empêcher ou limiter un écoulement de retour à travers eux vers l'enveloppe.

5. Panneau selon l'une quelconque des revendications précédentes où des éléments de support (83 ou 147) pour la plaque de recouvrement s'étendent à travers le noyau du panneau jusqu'à ladite plaque.

6. Panneau selon l'une quelconque des revendications précédentes où la plaque de recouvrement (87) forme une construction soudée intégrale avec des faces latérales adjacentes (88) du panneau.

7. Panneau selon l'une quelconque des revendications 1 à 5 où l'enveloppe comprend une ossature périphérique de support (77) contre laquelle la plaque de recouvrement (73) repose librement pour permettre une dilatation thermique relative entre la plaque de recouvrement et l'enveloppe.

8. Panneau selon la revendication 7 où des moyens élastiques (78) sollicitent la plaque de recouvrement contre ladite ossature de support.

9. Panneau selon l'une quelconque des revendications précédentes comprenant un moyen chauffant (103 ou 103a) disposé immédiatement adjacent à ladite face chaude.

10. Panneau selon l'une quelconque des revendications précédentes ayant une coupe transversale voûtée ou en gorge.

**Patentansprüche**

1. Zusammengesetzte wärmeisolierende Tafel zur Verwendung in einem Stahlwalzwerk, bestehend aus einer Frontseite, die von wärmeisolierenden Mitteln abgestützt ist und durch ein benachbartes heißes Material im Walzwerk auf eine Temperatur nahe derjenigen des Materials aufheizbar ist, um Wärme an das Material zurückzustrahlen, dadurch gekennzeichnet, daß die Tafel (70 oder 71 oder 111, 112 oder 140, 141) aus einem äußeren Schutzgehäuse besteht, das mindestens eine wärmeisolierende Schicht (74, 75 oder 91, 92) aus Keramikfasern enthält, wobei eine die Hauptfläche des Gehäuses bedeckende Abdeckplatte (73 oder 87) so angeordnet ist, daß sie eine heiße Frontseite bildet, die dem heißen Material gegenüberliegt, und die gegenüber den benachbarten Bereichen des Gehäuses eine relative Wärmedehnung ausführen kann.

2. Tafel nach Anspruch 1, wobei zumindest ein Teil der Fläche der Abdeckplatte mit örtlichen Profilierungen versehen ist.

3. Tafel nach Anspruch 1 oder 2, dadurch gekennzeichnet, daß das Gehäuse eine der Hauptseite der Abdeckplatte gegenüberliegende Hauptseite (89) aufweist, die so angeordnet ist, daß sie gegenüber den benachbarten Bereichen des Gehäuses Wärmedehnungen ausführen kann.

4. Tafel nach einem der Ansprüche 1 bis 3, wobei durch das Gehäuse oder durch das Gehäuse gemeinsam mit der Abdeckplatte eine im wesentlichen staubdichte Umhüllung für den Kern gebildet wird, und wobei vom Inneren des Gehäuses nach außen führende Belüftungsöffnungen (79 oder 93) mit Rückschlagverschlüssen (94) versehen sind, um einen Rückfluß in das Gehäuse zu verhindern oder zu begrenzen.

5. Tafel nach einem der vorhergehenden Ansprüche, wobei sich Stützelemente (83 oder 147) für die Abdeckplatte durch den Kern der Tafel hindurch zu der Platte erstrecken.

6. Tafel nach einem der vorhergehenden Ansprüche, wobei die Abdeckplatte (87) mit den benachbarten Seitenflächen (88) der Tafel einstückig verschweißt ist.

7. Tafel nach einem der Ansprüche 1 bis 5, dadurch gekennzeichnet, daß das Gehäuse aus einem umlaufenden Stützrahmen (77) besteht, an dem die Abdeckplatte (73) frei anliegt, um Wärmedehnungen zwischen der Abdeckplatte und dem Gehäuse zu ermöglichen.

8. Tafel nach Anspruch 7, wobei elastische Mittel (78) die Abdeckplatte gegen den Stützrahmen belasten.

9. Tafel nach einem der vorhergehenden Ansprüche, gekennzeichnet durch Heizmittel (103 oder 103a) die unmittelbar neben der heißen Seite angeordnet sind.

10. Tafel nach einem der vorhergehenden Ansprüche, gekennzeichnet durch einen bogen— oder rinnenförmigen Querschnitt.

# FIG.1

FIG. 2

FIG. 3

FIG. 4

2 .

FIG.5

FIG.6

FIG.7

3